Europäisches Patentamt

European Patent Office

Office européen des brevets

(11) Publication number: **0 491 418 A1**

# EUROPEAN PATENT APPLICATION

(21) Application number: **91203203.4**

(22) Date of filing: **06.12.91**

(51) Int. Cl.5: **B60J 7/22**

(30) Priority: **17.12.90 NL 9002768**

(43) Date of publication of application:
**24.06.92 Bulletin 92/26**

(84) Designated Contracting States:
**DE FR GB IT NL SE**

(71) Applicant: **VERMEULEN-HOLLANDIA OCTROOIEN II B.V.**
**Küppersweg 89**
**NL-2031 EB Haarlem(NL)**

(72) Inventor: **Huyer, Johannes Nicolaas**
**Rietkamp 4**
**NL-1991 BN Velserbroek(NL)**

(74) Representative: **Metman, Karel Johannes et al**
**Octrooibureau Los en Stigter B.V. P.O.Box 20052**
**NL-1000 HB Amsterdam(NL)**

(54) Wind deflector for an open roof construction.

(57) A wind deflector (5) for an open roof construction which is provided with a closure means adapted to open an aperture (2) in the fixed roof (1) of the vehicle, comprises an elongate body for arrangement in transverse direction near the front edge (4) of the roof aperture (2). The front side of the body has a backwardly and upwardly inclining portion (13) and a backwardly and downwardly inclining portion (14) connecting to the lower side of the first-mentioned portion. The transition between said portions is lying, in an operative position of the wind deflector (5), preferably level with, or slightly above or below, the level of the fixed roof (1) of the vehicle in front of the wind deflector. As a result a part of the air flow (10) arriving at the wind deflector (5) is forcingly deflected underneath said body and upwardly again behind the body when the vehicle is driven. A buffeting effect is counteracted in this manner.

fig.1

Rank Xerox (UK) Business Services

The invention relates to a wind deflector for an open roof construction which is provided with a closure means adapted to open an aperture in the fixed roof of the vehicle, comprising an elongate body for arrangement in transverse direction near the front edge of the roof aperture.

Such wind deflectors are intended to prevent an air flow passing over the fixed roof of the vehicle from entering the interior of the vehicle to an undesired extent when the vehicle is driven with the closure means of the open roof construction opened to a backward position. The known wind deflectors have the disadvantage, however, that primarily with fully backwardly slid closure means and at a certain speed of the vehicle, an aerodynamic phenomenon, known as "buffeting", may arise which is caused by air "striking" into the interior at the rear side of the roof opening leading to a noise which is unpleasant for the passengers.

The object of the present invention is to provide a wind deflector of the type mentioned in the preamble, in which this phenomenon is counteracted in an efficient way.

For this purpose the wind deflector according to the invention is characterized in that the body includes means to forcingly deflect a part of the air flow arriving at the wind deflector underneath said body when the vehicle is driven.

In tests it has been surprisingly found that the "buffeting" effect is substantially prevented when a part of the air flow is forcingly guided below the body of the wind deflector.

This deflection of the air flow is realized in a simple way when a lower part of the front side of the body extends vertically or inclines downwardly from a position lying substantially level with, or slightly above or below, the level of the fixed roof, wherein preferably the front side of the body has a backwardly and upwardly inclining portion and a backwardly and downwardly inclining portion connecting to the lower side of the first-mentioned portion, the transition between said portions lying, in an operative position of the wind deflector, preferably level with, or slightly above or below, the level of the fixed roof of the vehicle in front of the wind deflector.

Of course there should always be a gap or the like between the edge of the fixed roof and the wind deflector, or the wind deflector itself should have an air gap in order to enable an air flow underneath. Advantageously the cross-sectional shape of the body of the wind deflector is selected such that, when the vehicle is driven, there is caused such underpressure behind the body that the air flow guided underneath is deflected more or less upwardly and therefor does not enter the interior of the vehicle.

The invention will hereafter be described with reference to the drawing very schematically showing an embodiment of the invention by way of example.

Fig. 1 is a plan view of a portion of a vehicle comprising an open roof construction including an embodiment of the wind deflector according to the invention.

Fig. 2 is an enlarged longitudinal sectional view of the vehicle roof of fig. 1.

Fig. 3 and 4 show a portion of the sectional view of fig. 2, wherein fig. 3 illustrates a prior art wind deflector and fig. 4 a wind deflector according to the invention.

Fig. 5 shows a diagram illustrating qualitatively the relation between the driving speed of the vehicle and the noise caused by the wind deflectors of fig. 3 and 4.

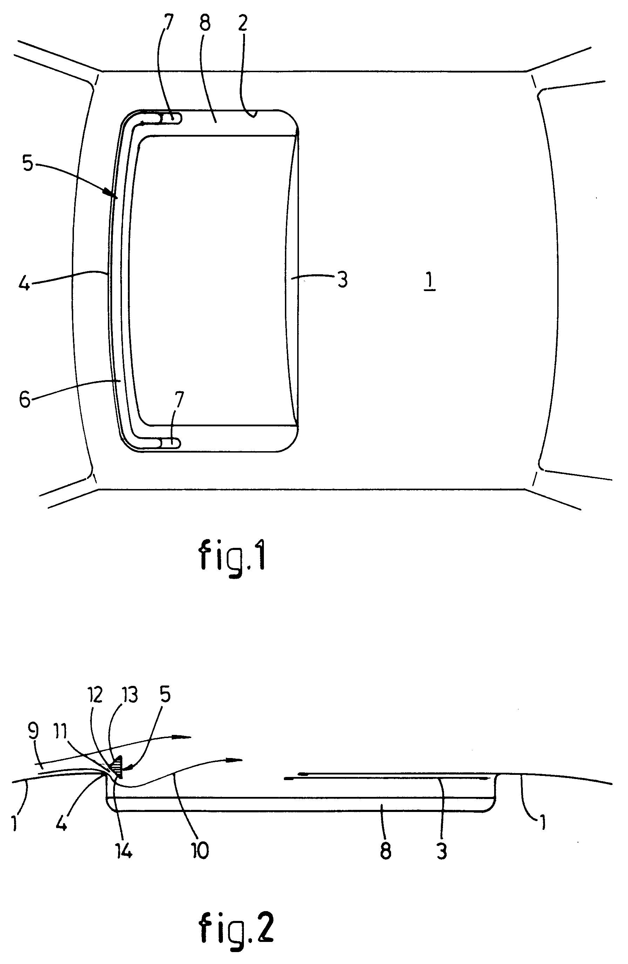

Fig. 1 shows in a plan view a part of a vehicle having a fixed roof 1 which is provided with a roof aperture 2 for the arrangement of an open roof construction. The open roof construction comprises a rigid panel 3 which, in any case, may be slid from the closed position in which it closes the roof aperture 2 backwardly to positions under the fixed roof 1. In case of a so-called tilt-sliding roof the panel may also be set in a inclined venting position. The invention is furthermore useful in a so-called "spoiler roof" in which the panel may be moved to an inclined venting position and may be slid backwardly above the fixed roof.

Near a front edge 4 of the roof aperture 2 there is arranged a wind deflector 5 which comprises in this case a body 6 extending in transverse direction of the vehicle, as well as two lateral arms 7 extending backwardly. In most cases the wind deflector 5 will be adjustably mounted by means of the arms 7 to a frame 8 of the open roof construction, such that the wind deflector 5 is adjustable between a not-shown lower inoperative position (with panel 3 closed) and a highest operative position (with panel 3 opened), such as shown in fig. 2.

In the operative position of fig. 2 and when the vehicle is driven the arriving air flow 9 is deflected upwardly in order to prevent wind from striking into the interior of the vehicle. According to the invention, however, a portion 10 of the air flow 9 is guided below the body 6 of the wind deflector 5 through a gap 11 between the front edge 4 of the roof aperture 2 and the front side of the body 6. This air flow 9 guided underneath prevents the so-called "buffeting" and the noise caused thereby at certain driving speeds of the vehicle.

In the embodiment shown by way of example the body 6 of the wind deflector 5 has a substantially triangular cross-section with the vertex 12 thereof being directed forwardly, said vertex 12 forming a transition between an upper upwardly and backwardly inclining portion 13 and a lower downwardly and backwardly inclining portion 14. The transition 12 between both of said portions 13 and 14 and serving as vertex of the triangle, is preferably lying level with, or slightly above or below, the level of the fixed roof 1, so that a part of the arriving air flow 9 is guided in a controlled way underneath the body 6 of the wind deflector 5. The cross-sectional shape of the body 6 further causes the development of an underpressure behind the body 6 when the vehicle is driven, which underpressure causes the air flow 10, after passing the wind deflector 5, to be deflected upwardly again and therefor does not enter the interior of the vehicle.

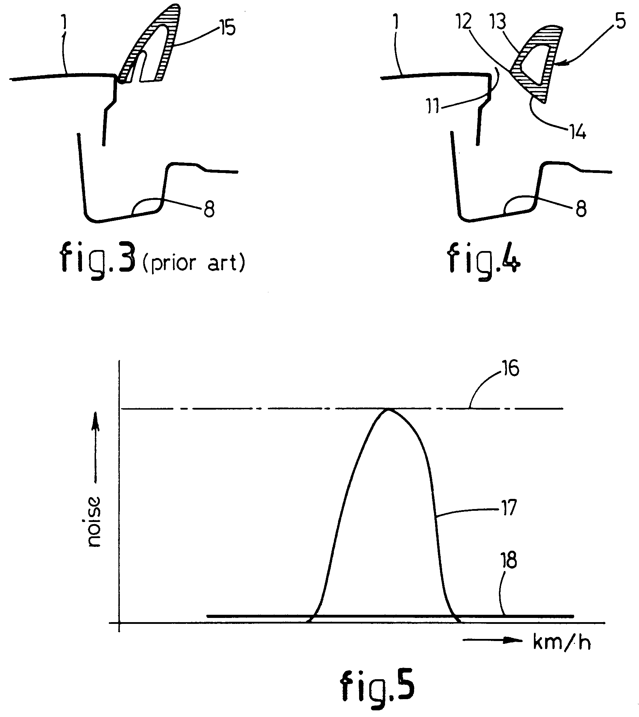

Fig. 3, 4 and 5 subsequently show a prior art wind deflector 15, a wind deflector 5 according to the invention and a diagram in which for both wind deflectors 5 and 15 the noise as a result of "buffeting" is shown as a function of the driving speed of the vehicle. The horizontal axis of the diagram of fig. 5 indicates the driving speed of the vehicle in kilometers per hour, while on the vertical axis of the diagram the relative noise level is set out, line 16 indicating the general noise level within the vehicle. Line 17 shows the noise caused by the prior art wind deflector 15 as a function of the driving speed of the vehicle and line 18 shows the same for the wind deflector 5 according to the invention. It will be clear that when the wind deflector according to the invention is used no additional noise as a result of "buffeting" is perceptible.

The invention is not restricted to the embodiments shown in the drawing and described herein before by way of example, which can be varied in different ways within the scope of the invention.

**Claims**

1.  Wind deflector for an open roof construction which is provided with a closure means adapted to open an aperture in the fixed roof of the vehicle, comprising an elongate body for arrangement in transverse direction near the front edge of the roof aperture, **characterized** that the body includes means to forcingly deflect a part of the air flow arriving at the wind deflector underneath said body when the vehicle is driven.

2.  Wind deflector according to claim 1, wherein a lower part of the front side of the body extends vertically or inclines downwardly from a position lying substantially level with, or slightly above or below, the level of the fixed roof.

3.  Wind deflector according to claim 2, wherein the front side of the body has a backwardly and upwardly inclining portion and a backwardly and downwardly inclining portion connecting to the lower side of the first-mentioned portion, the transition between said portions lying, in an operative position of the wind deflector, preferably level with, or slightly above or below, the level of the fixed roof of the vehicle in front of the wind deflector.

4.  Wind deflector according to claim 3, wherein the body has a substantially triangular cross-section.

5.  Wind deflector according to one of the preceding claims, wherein the body is adjustable in vertical direction between an operative position projecting above the level of the fixed roof of the vehicle when the closure means is opened, and an inoperative position in which it is being lowered below the level of the fixed roof.

6.  Open roof construction having a wind deflector according to one of the preceding claims.

7.  Vehicle comprising a wind deflector according to one of claims 1-5.

fig.1

fig.2

fig.3 (prior art)

fig.4

fig.5

European Patent
Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-3 833 046 (BAYERISCHEN MOTOREN WERKE) <br> * column 2, line 16 - line 39; figure 2 * | 1-5 | B60J7/22 |
| P,X | EP-A-0 421 115 (PORSCHE) <br> * the whole document * | 1 | |

|  |  |  | TECHNICAL FIELDS SEARCHED (Int. Cl.5 ) |
|---|---|---|---|
|  |  |  | B60J |

The present search report has been drawn up for all claims

| Place of search | Date of completion of the search | Examiner |
|---|---|---|
| THE HAGUE | 19 MARCH 1992 | FOGLIA A. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)